# EUROPÄISCHE PATENTSCHRIFT

(11) **EP 1 062 116 B1**
(45) Veröffentlichungstag und Bekanntmachung des Hinweises auf die Patenterteilung: **06.11.2002**
(21) Anmeldenummer: 99914481.9
(22) Anmeldetag: 05.03.1999
(51) Int. Cl.: B60N 2/00

(54) **VORRICHTUNG ZUR HALTERUNG EINES FAHRZEUGSITZES**
DEVICE FOR FIXING A VEHICLE SEAT
DISPOSITIF DE FIXATION POUR SIEGE DE VEHICULE

(30) Priorität: 13.03.1998 DE 29804542 U
(43) Veröffentlichungstag der Anmeldung: 27.12.2000
(73) Patentinhaber: Johnson Controls GmbH, 51399 Burscheid (DE)
(72) Erfinder: SHAFRY, Gavriel, D-58540 Meinerzhagen (DE)
(74) Vertreter: Zapf, Christoph, Dipl.-Ing.
(86) Internationale Anmeldenummer: EP9901443
(87) Internationale Veröffentlichungsnummer: WO99047377

(56) Entgegenhaltungen:
- EP-A- 0 397 333
- EP-A- 0 545 743
- EP-A- 0 546 908
- EP-A- 0 602 696
- EP-A- 0 609 130
- EP-A- 0 622 266
- EP-A- 0 716 950
- EP-A- 0 747 554
- EP-A- 0 863 042
- US-A- 4 773 693
- US-A- 5 482 345

## Beschreibung

Die vorliegende Erfindung betrifft eine Vorrichtung zur lösbaren Halterung eines Fahrzeugsitzes an einem Fahrzeugboden, mit einem sitzseitigen Halterungselement zum Zusammenwirken mit einem bodenseitigen, insbesondere ortsfesten Halteteil des Fahrzeugs.

Zur lösbaren Halterung von Fahrzeugsitzen in Kraftfahrzeugen sind zunächst verschiedenartigste Hakenverbindungen bekannt. Lediglich beispielsweise sei hier auf einige Veröffentlichungen hingewiesen: EP 0 397 333, EP 0 602 696, EP 0 609 130, EP 0 546 908 sowie EP 0 622 266.

Diese bekannten Halterungen haben zum Teil den Nachteil, daß der gesamte Sitz zum Lösen bzw. Einsetzen in einer bestimmten Weise bewegt, insbesondere verkippt werden muß. Dies ist vor allem bei schweren Sitzen (Sitzbänken) von Nachteil.

Aus der EP-A-0 747 554 und auch aus der EP-A-0 716 950 ist eine Halterung bekannt, wobei es sich um eine Sitzfußverriegelung in Form eines stift- bzw. bolzenförmigen Befestigungselementes handelt, welches in eine fahrzeugseitige Halteöffnung eingesteckt werden kann. Innerhalb des Befestigungselementes ist mindestens eine Sperrkugel derart angeordnet, dass diese in der eingesetzten und verriegelten Stellung bereichsweise seitlich nach außen ragt und den Rand der Halteöffnung hintergreift. Zum Entriegeln wird ein innerer Bolzen insbesondere mittels eines Bowdenzuges aus dem Bereich der Sperrkugel weggezogen, so daß letztere nach innen ausweichen kann, wonach das Befestigungselement aus der Halteöffhung entnommen werden kann. Diese bekannte Vorrichtung hat zwar den Vorteil, dass die Fügerichtung zwischen Sitz und Fahrzeug im wesentlichen senkrecht zum Fahrzeugboden verläuft, wobei es sich um eine einfache Längsbewegung ohne jegliches Verkippen des Sitzes handelt. Allerdings hat die bekannte Vorrichtung den Nachteil, daß sie konstruktiv recht aufwendig ist, und zwar wegen einer recht großen Anzahl von beweglichen Teilen und erforderlichen Federelementen.

Die US 4,773,693 offenbart einen gattungsgemäßen Sitzlösemechanismus. Zwei zangenartige, gelenkig verbundene Halteschenkel sind seitlich am Sitzrahmen befestigt und deren Endbereiche sind derart ausgeformt, dass sie in einem zusammengeführten Arretierzustand formschlüssig mit einem am Fahrzeugboden befestigten Halteteil verbindbar sind. Über eine Zugfeder werden die zangenartigen Halteschenkel beispielsweise im Arretierzustand zusammengezogen. Zur Lösung der Verbindung wird ein Hebel, der an einem Haltehebel angeformt ist, entgegen der Federkraft betätigt, wodurch sich die Halteschenkel spreizen und das Halteteil freigegeben wird. Die Arretierung dieser Verbindung erfolgt dabei lediglich über die Zugfeder. Außerdem muß die Federkraft zur Lösung der Verbindung vom Bediener überwunden werden.

Die US 5,482,345 offenbart ein Klinkensystem zum Arretieren bzw. Lösen eines Fahrzeugsitzes, insbesondere für einen Van. Auch dieses System basiert auf zwei gelenkig miteinander verbundenen zangenartigen Halteschenkeln, die mit einem am Fahrzeugboden befestigten Haltemittel zusammenwirken. Lediglich ein Halteschenkel ist schwenkbar gelagert und wird über eine Federkraft in den Arretierzustand gedrückt. Zur Lösung der Verbindung wird der bewegbare Halteschenkel über einen Seilzug entgegen der Federkraft bewegt, so dass sich die zangenartige Verbindung öffnet. Dieses System ist sehr aufwendig und auch hier ist es für den Bediener notwendig, die Federkraft zur Lösung der Verbindung zu überwinden. Auch erfolgt die Arretierung letztlich nur durch die Federkraft.

Der vorliegenden Erfindung liegt die Aufgabe zugrunde, eine Vorrichtung der gattungsgemäßen Art zu schaffen, die sich durch konstruktive Einfachheit sowie auch hohen Bedienungskomfort auszeichnet.

Erfindungsgemäß wird dies durch die Kombination der Merkmale des Anspruchs 1 erreicht.

Bei dem fahrzeugseitigen Halteteil kann es sich um ein bolzenartiges, im wesentlichen zylindrisches und etwa parallel zum Fahrzeugboden verlaufendes Teil beispielsweise eines Haltebügels handeln. Ebenso wären kugel- oder pilzförmige Halteteile denkbar. Die Halteschenkel weisen dazu auf den einander zugekehrten Seiten ihrer freien Enden Aufnahmen für das Halteteil auf, wobei diese Aufnahmen formmäßig an die Kontur des Halteteils derart angepaßt sind, daß das Halteteil im Arretierzustand zumindest bereichsweise formschlüssig in den beiden Aufnahmen sitzt.

Das erfindungsgemäße Halterungselement ist konstruktiv außerordentlich einfach ausgebildet. Es brauchen lediglich die beiden Halteschenkel gelenkig verbunden zu werden. Zweckmäßigerweise sind dabei die beiden Halteschenkel mit einer Spreiz-Federkraft beaufschlagt und mittel eines Betätigungselementes gegen die Federkraft zusammendrückbar. Somit sind lediglich vier Einzelteile erforderlich (zwei Halteschenkel, Spreizfeder und Betätigungselement). Zweckmäßigerweise ist hierbei das Betätigungselement hülsenförmig ausgebildet und relativ zu den Halteschenkeln auf diesen derart verschiebbar geführt, daß ausgehend von dem Lösezustand, in dem die Halteschenkel gespreizt zumindest mit ihren freien Endbereichen außerhalb des hülsenförmigen Betätigungselementes angeordnet sind, durch Überschieben des Betätigungselementes in Richtung der freien Enden die Halteschenkel in ihren Arretierzustand zusammengeführt und zusammengehalten werden.

Erfindungsgemäß entspricht somit die Fügerichtung der Sitzhalterung vorteilhafterweise der Betätigungsrichtung des Betätigungselementes, wobei auch von besonderem Vorteil ist, daß es sich nur um lineare, zum Fahrzeugboden im wesentlichen senkrechte Bewegungen handelt. Hierdurch werden umständliche Bewegungen, insbesondere Kippbewegungen, des gesamten Sitzes vermieden, was vor allem bei schweren Sitzen (Sitzbänken) von besonderem Vorteil ist.

Die erfindungsgemäße Halterungsvorrichtung dient zweckmäßigerweise nur zur Arretierung des Sitzes. Die Tragkraft- bzw. Lastabstützung wird vorzugsweise über separate Trägerteile (Sitzfüße) gewährleistet. Hierbei kann die erfindungsgemäße Halterungsvorrichtung aber mit Vorteil in einen Sitzfuß integriert werden. Zudem kann dabei auch mit Vorteil eine Fernbetätigung beispielsweise über einen Bowdenzug oder dergleichen vorgesehen sein.

Weitere vorteilhafte Ausgestaltungsmerkmale der Erfindung sind in den Unteransprüchen sowie der folgenden Beschreibung enthalten.

Anhand von zwei bevorzugten, in der Zeichnung veranschaulichten Ausführungsbeispielen soll im folgenden die Erfindung näher erläutert werden. Dabei zeigen:
- Fig. 1: eine teilgeschnittene Seitenansicht einer ersten Ausführungsform der erfindungsgemäßen Halterungsvorrichtung, und zwar in dem Arretierzustand der Vorrichtung,
- Fig. 2: einen Querschnitt in der Ebene II-II gemäß Fig.1,
- Fig. 3: einen Querschnitt in der Ebene III-III gemäß Fig. 1,
- Fig. 4: eine Darstellung analog zu Fig. 1, jedoch in dem Lösezustand der Vorrichtung,
- Fig. 5: eine schematische Perspektivdarstellung einer zweiten Ausführungsform der erfindungsgemäßen Vorrichtung im Lösezustand bzw. während der Montage und
- Fig. 6: eine schematische Teil-Vorderansicht der Ausführung nach Fig. 5 im Arretierzustand.

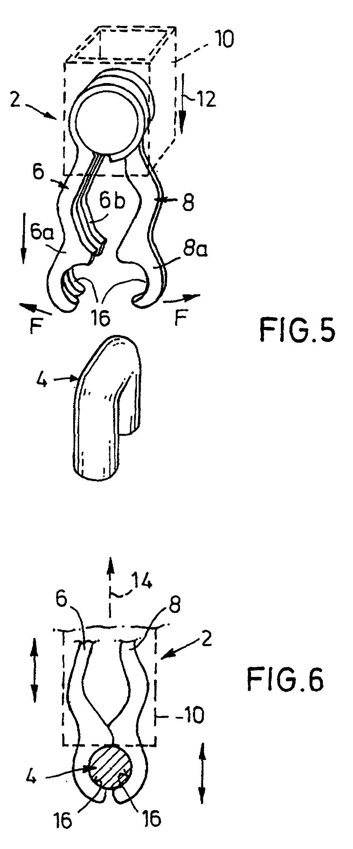

Eine erfindungsgemäße Vorrichtung zur lösbaren Halterung eines Fahrzeugsitzes an einem Fahrzeugboden (Sitz und Boden nicht dargestellt) besteht aus mindestens einem sitzseitigen Halterungselement 2, welches mit einem fahrzeugseitigen, insbesondere ortsfest am Fahrzeugboden angeordneten Halteteil 4 zusammenwirkt. In den dargestellten Beispielen handelt es sich bei dem Halteteil 4 um ein bolzenförmiges, im wesentlichen zylindrisches Teil beispielsweise eines Haltebügels (vgl. Fig. 5). Allerdings wären beispielsweise auch Kugel- oder Pilzköpfe denkbar.

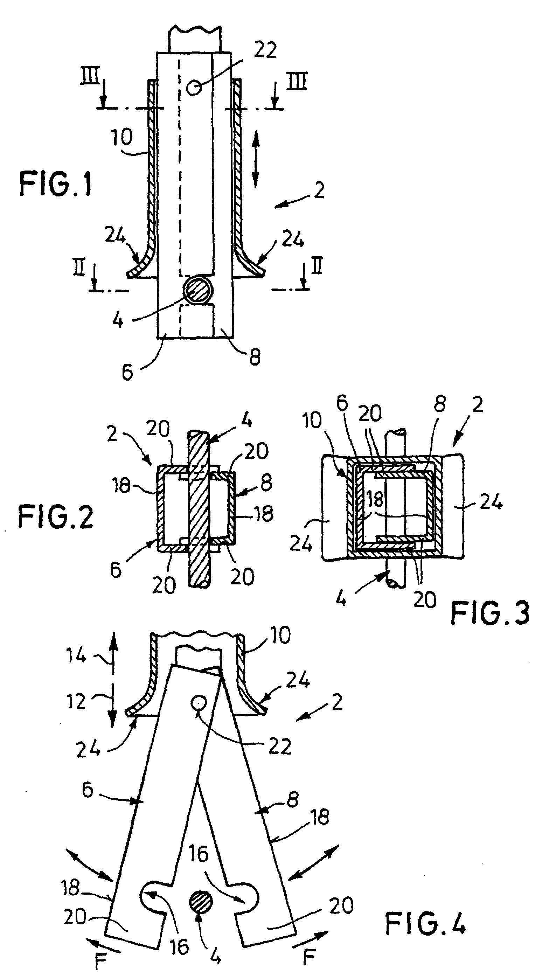

Erfindungsgemäß ist das Halterungselement 2 nach Art einer Zange mit zwei gelenkig verbundenen Halteschenkeln 6 und 8 ausgebildet. Diese Halteschenkel 6, 8 sind jeweils im freien Endbereich in Anpassung an die Kontur des bodenseitigen Halteteils 4 derart ausgebildet, daß das Halterungselement 2 einerseits in einem zusammengeführten Arretierzustand der beiden Halteschenkel 6, 8 formschlüssig mit dem Halteteil 4 verbunden ist (vgl. Fig. 1 und 6) oder andererseits in einem gespreizten Lösezustand der beiden Halteschenkel 6, 8 mit dem Halteteil 4 kuppelbar oder von diesem trennbar ist (vgl. Fig. 4 und 5).

Zweckmäßigerweise sind die beiden Halteschenkel 6, 8 jeweils mit einer Spreiz-Federkraft F beaufschlagt. Zum Zusammendrücken gegen die Federkraft F ist hierbei ein Betätigungselement 10 vorgesehen. Dieses Betätigungselement 10 ist bevorzugt hülsenförmig ausgebildet und dabei relativ zu den Halteschenkeln 6, 8 auf diesen bzw. über diese derart verschiebbar geführt, daß ausgehend von dem Lösezustand (Fig. 4 bzw. 5), wobei die Halteschenkel 6, 8 gespreizt zumindest mit ihren freien Endbereichen außerhalb des hülsenförmigen Betätigungselementes 10 angeordnet sind, durch Überschieben des Betätigungselementes 10 in Richtung der freien Enden (Pfeilrichtung 12) die Halteschenkel 6 und 8 in den Arretierzustand zusammengeführt und dann auch arretierend zusammengehalten werden (Fig. 1 bzw. 6).

Zum Lösen des Halterungselementes 2 von dem Halteteil 4 braucht lediglich das Betätigungselement 10 in Pfeilrichtung 14 von den Halteschenkeln 6, 8 wegbewegt (gezogen) zu werden; aufgrund der Spreiz-Federkraft F spreizen sich die Halteschenkel 6 und 8 selbsttätig, wodurch sie dann das Halteteil 4 freigeben.

Die Halteschenkel 6, 8 weisen auf den einander zugekehrten, gegenüberliegenden Seiten ihrer freien Enden durch Vertiefungen bzw. Ausnehmungen gebildete Aufnahmen 16 für das Halteteil 4 auf (Fig. 4 und 5). Diese Aufnahmen 16 sind formmäßig an die Kontur des Halteteils 4 derart angepaßt, daß das Halteteil 4 im Arretierzustand der Halteschenkel 6, 8 zumindest bereichsweise formschlüssig, vorzugsweise spielfrei in den beiden Aufnahmen 16 sitzt (Fig. 1 und 2 sowie Fig. 6).

In der ersten Ausführungsform der Erfindung nach Fig. 1 bis 4 ist jeder der beiden Halteschenkel 6, 8 als Profilstück mit einem im wesentlichen U-förmigen Querschnitt mit einer Bodenwandung 18 und zwei Seitenwandungen 20 ausgebildet. Die beiden Profilstücke sind im Bereich ihrer bereichsweise ineinandergreifenden Seitenwandungen 20 einerseits über eine Schwenkachse 22 angelenkt und weisen andererseits die formschlüssig mit dem Halteteil 4 zusammenwirkenden Aufnahmen 16 auf.

Bei dem Ausführungsbeispiel nach Fig. 5 und 6 besteht der eine Halteschenkel 6 aus (mindestens) zwei parallelen, beabstandeten Schenkelteilen 6a und 6b, während der andere Halteschenkel 8 (wenigstens) ein entsprechendes Schenkelteil 8a aufweist. Die Schenkelteile 6a, b und 8a der beiden Halteschenkel 6 und 8 sind hierbei derart ausgebildet und relativ zueinander derart angeordnet, daß sie im Arretierzustand bereichsweise kammartig ineinandergreifen bzw. zwischeneinander bereichsweise eingreifen.

Wie in Fig. 1, 3 und 4 veranschaulicht ist, kann das hülsenförmige Betätigungselement 10 auf seiner in Richtung der freien Enden der Halteschenkel 6, 8, d.h. in Pfeilrichtung 12, weisenden Seite trichterartige Erweiterungen 24 aufweisen, was beim Überschieben in Pfeilrichtung 12 das Zusammendrücken der Halteschenkel 6, 8 erleichtert.

Die erfindungsgemä&e Vorrichtung kann sehr wirtschaftlich beispielsweise aus Blechformteilen und/oder Stanzteilen hergestellt werden.

Die Erfindung ist nicht auf die dargestellten und beschriebenen Ausführungsbeispiele beschränkt, sondern umfaßt auch andere unter den Anspruch 1 fallenden, gleichwirkenden Ausführungen.

## Patentansprüche

1. Vorrichtung zur lösbaren Halterung eines Fahrzeugsitzes an einem Fahrzeugboden mit einem sitzseitigen Halterungselement (2) zum Zusammenwirken mit einem bodenseitigen, insbesondere im Fahrzeug ortsfesten Halteteil (4), wobei das Halterungselement (2) zangenartig mit zwei gelenkig verbundenen Halteschenkeln (6, 8) ausgebildet ist, wobei die Halteschenkel (6, 8) im freien Endbereich in Anpassung an das bodenseitige Halteteil (4) derart ausgebildet sind, dass das Hatterungselement (2) in einem zusammengeführten Arretierzustand der Halteschenkel (6, 8) formschlüssig mit dem Halteteil (4) verbunden ist sowie in einem gespreizten Lösezustand der beiden Halteschenkel (6, 8) von dem Halteteil (4) getrennt ist,
**dadurch gekennzeichnet,**
**dass** ein hülsenförmig ausgebildetes Betätigungselement (10) relativ zu den Halteschenkeln (6, 8) auf diesen derart verschiebbar geführt ist, dass ausgehend von dem Lösezustand in dem die Halteschenkel (6, 8) gespreizt zumindest mit ihren freien Endbereichen außerhalb des hülsenförmigen Betätigungselementes (10) angeordnet sind, durch Überschieben des Betätigungselementes (10) in Richtung der.freien Enden die Halteschenkel (6, 8) in ihren Arretierzustand zusammengeführt und zusammengehalten werden.

2. Vorrichtung nach Anspruch 1,
**dadurch gekennzeichnet,**
**dass** die beiden Halteschenkel (6, 8) mit einer Spreiz-federkraft (F) beaufschlagt sind.

3. Vorrichtung nach einem der Ansprüche 1 bis 2,
**dadurch gekennzeichnet,**
**dass** die Halteschenkel (6, 8) auf den einander zugekehrten Seiten ihrer freien Enden Aufnahmen (16) für das Halteteil (4) aufweisen, wobei die Aufnahmen (16) formmäßig an die Kontur des Halteteils (4) derart angepaßt sind, dass das Halteteil (4) im Arretierzustand der Halteschenkel (6, 8) zumindest bereichsweise formschlüssig in den beiden Aufnahmen (16) sitzt.

4. Vorrichtung nach einem der Ansprüche 1 bis 3,
**dadurch gekennzeichnet,**
**dass** jeder der beiden Halteschenkel (6, 8) als Profilstück mit einem im wesentlichen U-förmigen Querschnitt mit einer Bodenwandung (18) und zwei Seitenwandungen (20) ausgebildet ist, wobei die beiden Profilstücke im Bereich ihrer bereichsweise ineinandergreifenden Seitenwandungen (20) einerseits über eine Schwenkachse (22) angelenkt sind und andererseits formschlüssig mit dem Halteteil (4) zusammenwirken.

5. Vorrichtung nach einem der Ansprüche 1 bis 3,
**dadurch gekennzeichnet,**
**dass** einer der beiden Halteschenkel (6) aus mindestens zwei parallelen, beabstandeten Schenkelteilen (6a, b) besteht, während der andere Halteschenkel (8) wenigstens ein entsprechendes Schenkelteil (8a) aufweist, wobei die Schenkelteile (6a, b, 8a) der beiden Halteschenkel (6, 8) derart ausgebildet und relativ zueinander derart angeordnet sind, dass sie im Arretierzustand bereichsweise kammartig ineinandergreifen.

## Claims

1. Device for the releasable securing of a vehicle seat to a vehicle floor, having a securing element (2) which is on the seat and is intended for interaction with a retaining part (4) which is on the floor and is, in particular, positionally fixed in the vehicle, the securing element (2) being designed in the manner of a pair of tongs with two retaining limbs (6, 8) connected in an articulated manner, the retaining limbs (6, 8) being designed in the free end region to match the retaining part (4) on the floor in such a manner that in a brought-together locking state of the retaining limbs (6, 8) the securing element (2) is connected in a form-fitting manner to the retaining part (4), and in an expanded release state of the two retaining limbs (6, 8) is separated from the retaining part (4), **characterized in that** an actuating element (10) designed in the form of a sleeve is guided displaceably relative to the retaining limbs (6, 8) on the latter in such a manner that, starting from the release state in which the retaining limbs (6, 8) are arranged expanded, at least with their free end regions outside the actuating element (10) in the form of a sleeve, the retaining limbs (6, 8) are brought into their locking state and held together by the actuating element (10) being slid over them in the direction of the free ends.

2. Device according to Claim 1, **characterized in that** the two retaining limbs (6, 8) are subjected to an expanding spring force (F).

3. Device according to either of Claims 1 and 2, **characterized in that** the retaining limbs (6, 8) have, on the mutually facing sides of their free ends, sockets (16) for the retaining part (4), the sockets (16) being matched in terms of shape to the contour of the retaining part (4) in such a manner that in the locking state of the retaining limbs (6, 8) the retaining part (4) sits at least in some areas in a form-fitting manner in the two sockets (16).

4. Device according to one of Claims 1 to 3, **characterized in that** each of the two retaining limbs (6, 8) is designed as a profile part having an essentially U-shaped cross section with a bottom wall (18) and two side walls (20), the two profiled parts firstly being linked via a pivot spindle (22) in the region of their side walls (20), which intermesh in some areas, and secondly interacting in a form-fitting manner with the retaining part (4).

5. Device according to one of Claims 1 to 3, **characterized in that** one of the two retaining limbs (6) comprises at least two parallel, spaced-apart limb parts (6a, b), while the other retaining limb (8) has at least one corresponding limb part (8a), the limb parts (6a, b, 8a) of the two retaining limbs (6, 8) being designed in such a manner and arranged relative to one another in such a manner that they intermesh in some areas in a comb-like manner in the locking state.

## Revendications

1. Dispositif de fixation amovible d'un siège de véhicule sur un sol de véhicule avec un élément de fixation (2) du coté du siège en vue d'une coopération avec une attache (4) sur le sol, fixe notamment dans le véhicule, l'élément de fixation (2) étant constitué de deux branches de fixation (6, 8) reliées articulées à la manière de pinces, les branches de fixation (6, 8) étant, dans la section libre de leurs extrémités et en adaptation avec l'attache (4) sur le sol, constituées tel que, dans un état d'arrêt des branches de fixation (6, 8) fermées, l'élément de fixation (2) est solidaire à engagement positif à l'attache (4) ainsi que séparé de l'attache (4) dans un état amovible écarté des deux branches de fixation (6, 8)
**caractérisé en ce qu'**un élément d'actionnement (10) sous forme de manchon est guidé relatif aux branches de fixation (6, 8) et mobile sur ces dernières, tel que, partant de l'état amovible écarté dans lequel les branches de fixation (6, 8) sont disposés écartés au moins avec leurs sections d'extrémités libres en dehors de l'élément d'actionnement (10) sous forme de manchon, les branches de fixation (6, 8) sont réunies et maintenues dans leur état d'arrêt en faisant glisser l'élément d'actionnement (10) vers les extrémités libres.

2. Dispositif selon la revendication 1
**caractérisé en ce que** les deux branches de fixation (6, 8) sont munies d'une force de ressort écarteur (F).

3. Dispositif selon l'une des revendications 1 à 2,
**caractérisé en ce que** les branches de fixation (6, 8) ont, sur les cotés en regard l'une de l'autre de leurs extrémités libres, des logements (16) pour l'attache (4), la forme des logements (16) étant adaptée au contour de l'attache (4) tel que, dans l'état d'arrêt des branches de fixation (6, 8), l'attache (4) se trouve, au moins par sections, à engagement positif dans les deux logements (16).

4. Dispositif selon l'une des revendications 1 à 3
**caractérisé en ce que** chacune des deux branches de fixation (6, 8) est formée en tant que profilé ayant une section essentiellement en U avec une paroi du fond (18) et deux parois latérales (20), les deux profilés étant d'une part articulés dans la section de leurs parois latérales (20) par un axe pivotant et s'engrenant l'un dans l'autre sur une certaine zone et d'autre part coopérant à engagement positif avec l'attache (4).

5. Dispositif selon l'une des revendications 1 à 3,
**caractérisé en ce que** l'une des deux branches de fixation (6, 8) est constituée d'au moins deux parties de branches (6a, b) parallèles distantes, tandis que l'autre partie de la branche de fixation (8) a au moins une partie de la branche (8a) correspondante, les parties des branches (6a, b, 8a) des deux branches de fixation (6, 8) étant formées et disposées relativement l'une vers l'autre tel que, dans l'état d'arrêt, elles s'engrènent par zones.
